# EUROPÄISCHE PATENTSCHRIFT

(11) **EP 0 671 119 B1**
(45) Veröffentlichungstag und Bekanntmachung des Hinweises auf die Patenterteilung: **14.01.1998**
(21) Anmeldenummer: 95102366.2
(22) Anmeldetag: 21.02.1995
(51) Int. Cl.: A01B 29/04

(54) **Stabwalze**
Bar roller
Rouleau à barres

(30) Priorität: 23.02.1994 DE 4405795
(43) Veröffentlichungstag der Anmeldung: 13.09.1995
(73) Patentinhaber: Brockmöller, Fritz, D-29683 Fallingbostel (DE)
(72) Erfinder: Brockmöller, Fritz, D-29683 Fallingbostel (DE)
(74) Vertreter: Einsel, Robert, Dipl.-Ing.

(56) Entgegenhaltungen:
- DE-A- 2 724 033
- DE-A- 2 818 718
- DE-A- 2 912 392

## Beschreibung

Die Erfindung betrifft eine Stabwalze mit einem walzenförmigen Hohlkörper.

Stabwalzen mit einem walzenförmigen Hohlkörper sind beispielsweise als Krumenpacker in der Landwirtschaft bekannt. Ihre Mäntel, im folgenden Mantelflächen genannt, bestehen aus einer Vielzahl von parallel und annähernd quer zur Bewegungsrichtung der Walze angeordneten Stäben (DE 28 18 718). Die bekannte Stabwalze soll das grundsätzliche Problem solcher Walzen lösen, nämlich das Dichtsetzen des Innenraums mit Erde, Steinen, Stroh oder sonstigem Unrat. Zu diesem Zweck ist dort ein walzenförmiger, an seinen Stirnseiten um eine feste Achse rotierbar gelagerter Körper mit einer Mantelfläche aus Stäben als äußerer Walzenkörper verwendet und zusätzlich in diesem äußeren Walzenkörper ein innerer Walzenkörper frei beweglich angeordnet, der mit Kanten oder Ecken zwischen den Zwischenräumen des äußeren Walzenkörpers hervorragt. Beim Abrollen der Stabwalze werden die der Abrollseite abgewandten Kanten oder Ecken des inneren Walzenkörpers nach oben, also von der Auflage weggedrückt. Durch die daraus entstehende umlaufende Hin- und Herbewegung des inneren Walzenkörpers in dem äußeren Walzenkörper soll die Stabwalze sich während des Betriebs selbst reinigen.

Der Erfindung liegt die Aufgabe zugrunde, eine in ihrer Wirkungsweise verbesserte Stabwalze mit einem walzenförmigen Hohlkörper zu schaffen, bei dem die Selbstreinigung ohne einen in dem Hohlkörper frei beweglichen Innenkörper erreichbar ist.

Diese Aufgabe wird durch die im Anspruch 1 definierte Erfindung gelöst. Weiterbildungen der Erfindung sind in den Unteransprüchen definiert.

Durch die Erfindung wird eine Stabwalze geschaffen, die bei Verwendung nur eines Walzenkörpers den Vorteil der Selbstreinigung während des Betriebs der stabwalze bietet und dies mit verbesserten Laufeigenschaften der Walze und verringerter Geräuschentwicklung kombiniert.

Im Prinzip wird eine Stabwalze mit einem walzenförmigen Hohlkörper geschaffen, die eine aus abwechselnd beweglichen und starren Stäben aufgebaute Mantelfläche aufweist. Diese starren und diese beweglichen Stäbe sind schräg mit Winkelversatz gegen die Achsrichtung der Walze angeordnet. Beim Abrollen der Walze liegt diese daher ständig mit einem Teil eines festen Stabes auf der Unterlage auf und bewirkt so ein gleichmäßiges Abrollen wie das einer Walze mit glatter Oberfläche (Glattwalze). Die starren Stäbe bilden mit ihrer Lagerung als formbildende und formhaltende Elemente den Walzenkörper, der auf einer durchgehenden Welle oder auf Wellenstümpfen gelagert ist. Die beweglichen Stäbe sind senkrecht zu ihrer Längsachse in Richtung des Walzeninneren oder des Walzenäußeren beweglich angeordnet. An den stirnseitigen Enden der starren und der beweglichen Stäbe sind diese gemeinsam in einem Halterungselement vorzugsweise ortsfest gelagert. Eine Bewegung der beweglichen Stäbe relativ zu den festen Stäben gegeneinander ist vorzugsweise im mittleren Bereich der Walze vorgesehen, in dem erfahrungsgemäß die meisten Fremdkörper in den Innenbereich der Walze eindringen.

Das wird beispielsweise dadurch erreicht, daß die beweglichen Stangen zwar an ihren Enden fest gelagert sind, aber im übrigen Bereich flexibel bemessen sind.

Entlang der Drehachse der Stabwalze sind Halterungen vorgesehen, die die starren Stäbe miteinander fest und/oder ortsfest verbinden. Diese Halterungen zum Miteinanderverbinden der starren Stäbe dienen hauptsächlich dem Unterstützen und/oder der Aufrechterhaltung der Walzenform der Stabwalze.

Entlang der Drehachse der Walze sind weiterhin quer zur Längsrichtung der Stäbe bewegliche Mittel vorgesehen, die die beweglichen Stäbe in einem festen, vorbestimmten Abstand zueinander halten. Sie legen die beweglichen Stäbe nicht nur in einem mittleren Abstand zu den starren Stäben fest, sondern bewirken zugleich die erwünschte Relativbewegung. Die Mittel zum Halten der beweglichen Stäbe in ihrer Relativposition zu den starren Stäben werden beispielsweise durch eine oder mehrere Scheiben oder dergleichen gebildet, die einen größeren Durchmesser haben als der Walzenkörper und zugleich von den beweglichen Stäben zwischen sich in ihrer Position gehalten werden. Durch Verschiebung dieser Scheiben oder dergleichen quer zur Längsrichtung der Stäbe werden auch die beweglichen Stäbe quer zu ihrer Längrichtung von den Scheiben verschoben und dringen dabei durch die Öffnungen zwischen den festen Stäben hindurch. Dabei steht der dem gerade abrollenden beweglichen Stab diametral gegenüberliegende Stab am meisten vor. Wesentlicher für die Reinigung sind aber die dem gerade abrollenden Stab benachbarten Stäbe. Diese werden praktisch in Umfangsrichtung verschoben und bilden daher große Öffnungen in der Mantelwandung, durch die die in den Hohlraum eingedrungenen Bestandteile wieder austreten können. Die beweglichen Stäbe stehen somit unter Spannung bezüglich der stirnseitigen Halterungselemente und ihrer eigenen Längsrichtung. Beim Abrollvorgang des Walzenkörpers auf einem Boden, beispielsweise einem Acker, rollen auch die über die gesamte Längsachse der stabwalze verteilten Mittel zum Halten der beweglichen Stäbe auf dem Boden ab. Wegen ihres größeren Durchmessers steht der jeweils der Auflage gegenüberliegende Bereich dieser Mittel und damit die damit verbundenen flexiblen Stäbe über den durch die festen Stäbe festgelegten Umfang der Mantelfläche der Walze hinaus. Dadurch ergibt sich beim Abrollen ein ständig variierender Abstand beweglicher Stäbe zu den jeweils benachbarten starren Stäben. Durch ringförmige Ausbildung der die festen Stäbe und der die flexiblen Stäbe haltenden Mittel kann sich das in die walze eingedrungene Material über die Walze verteilen und gleichmäßig wieder austreten.

Bei einem bevorzugten Ausführungsbeispiel sind die beweglichen Stäbe durch jeweils eine Kette gebildet, die an ihren Enden fest eingespannt ist.

Zur näheren Erläuterung werden im folgenden mehrere Ausführungsbeispiele der Erfindung anhand der Zeichnungen beschrieben. Diese zeigen in:
- Fig. 1: eine perspektivische Ansicht einer ersten Ausführungsform einer Stabwalze mit abwechselnd starren und biegsamen Stäben,
- Fig. 2: eine Seitenansicht aus Fig. 1,
- Fig. 3: ein weiteres Ausführungsbeispiel in Seitenansicht mit abwechselnd starren Stäben und Ketten,
- Fig. 4: eine Detailansicht der Spannvorrichtung aus Fig. 3.

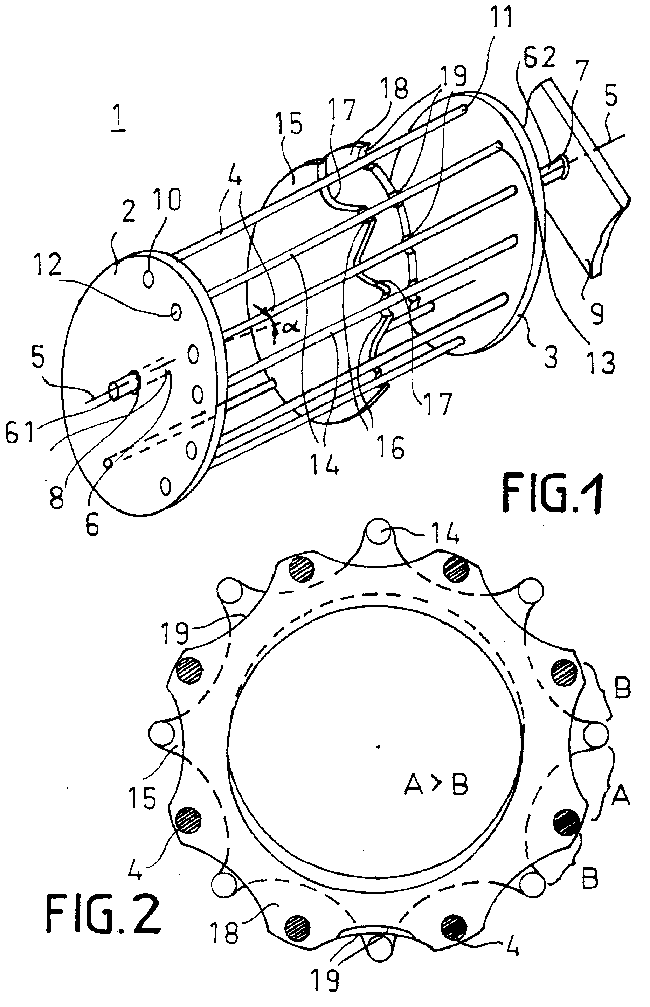

In Fig. 1 ist eine Stabwalze 1 mit in seitlichen Scheiben 2, 3 im Umfangsbereich befestigten starren Stäben 4 dargestellt. Die Scheiben 2, 3 sind um eine Drehachse 5 drehbar, beispielsweise durch Lagerung der Scheiben 2, 3 auf einer Welle 6, die in seitlichen Lagern 7,8 eines Rahmens 9 drehbar gelagert ist. Die Welle 6 kann als eine einzige, durchgehende Welle ausgebildet sein. Vorzugsweise sind im Rahmen 9 jedoch zwei Wellenstümpfe 61, 62 gelagert, die entweder im Rahmen 9 oder in den Scheiben 2, 3 drehbar gelagert sind. Die Befestigungsstellen 10, 11 der Stäbe 4 sind so gegeneinander verdreht, daß sie einen kleinen Winkel mit der auf den Umfang bzw. Mantel der Stabwalze 1 projizierten Achse einschließen. Der Winkel dieser Verdrehung ist so bemessen, daß stets ein Teil eines der starren Stäbe 4 auf dem Boden aufliegt. Dadurch wird einerseits ein gleichmäßiges und daher ruhiges Abrollen der Walze ermöglicht, andererseits aber auch ein resonanzartiges Aufschaukeln der Stabwalze 1 vermieden. Dies wäre nämlich wegen der gleichen Abstände der Stäbe beim Abrollen mit einer bestimmten Geschwindigkeit zu befürchten.

Bei dem Betrieb einer Stabwalze, beispielsweise als Krumenpacker bei der landwirtschaftlichen Bodenbearbeitung, können sich bei entsprechenden Bodenverhältnissen, beispielsweise bei großer Nässe, zwischen die starren Stäbe 4 der Stabwalzen 1 Erdkluten oder auch Steine setzen. Diese müssen entfernt werden, da sich diese Fremdbestandteile sonst in dem Hohlkörper der Stabwalze 1 anlagern und ansammeln und den Hohlkörper zunehmend zusetzen würden. Das Gewicht einer solchen gefüllten stabwalze würde das für den praktischen Betrieb zulässige Höchstgewicht weit übersteigen und die Funktionsweise und das Arbeitsergebnis beeinträchtigen. Da ein Reinigen von Hand sehr arbeits- und zeitaufwendig ist, ist die Stabwalze 1 so bemessen, daß sie sich während des Betriebes selbst reinigt. Dies bedeutet, daß sie aufgrund ihrer Konstruktion das Eindringen von Erdkluten oder dergleichen unterbindet oder in das Innere des Hohlkörpers gelangte Erdkluten oder Steine direkt wieder aus dem Hohlkörper hinaus transportiert.

In den Scheiben 2, 3 sind im Umfangsbereich zwischen den Befestigungsstellen 10, 11 für die starren Stäbe 4 entsprechende Befestigungsstellen 12, 13 für biegbare Stäbe 14 vorgesehen, in denen die Enden der biegbaren Stäbe 14 befestigt sind. Diese Befestigungsstellen 12, 13 sind wie die Befestigungsstellen 10, 11 so gegeneinander verdreht, daß die biegbaren Stäbe 14 einen ähnlichen Winkel mit der Projektion der Achse einschließen.

Zwischen den Befestigungsstellen 12, 13 sind die biegsamen Stäbe 14 so biegsam, daß sie in ihrem mittleren Bereich über den Umfang der durch die starren Stäbe 4 gebildeten Mantelfläche der Stabwalze 1 hinausgebogen werden können. In diesem mittleren Bereich der Stabwalze 1 sind eine oder mehrere Scheiben 15 angeordnet, die an ihrem Umfangsbereich Auflagestellen 16 für die Aufnahme der biegsamen Stäbe 14 aufweisen und Ausnehmungen 17, in denen die starren Stäbe 4 diese Scheiben 15 in jeder Lage der Scheibe 15 berührungsfrei durchdringen können. Die Auflagestellen 16 und die Ausnehmungen 17 sind mit etwa gleichen Abständen einander abwechselnd angeordnet. Bei der üblichen Länge einer Stabwalze 1 ist es zweckmäßig, ein oder mehrere, die Stabilität der starren Stäbe 4 unterstützende ortsfeste Scheiben 18 anzuordnen. In diesen ortsfesten Scheiben 18 sind die starren Stäbe vorzugsweise fest eingefügt. Die ortsfesten Scheiben 18 sind vorzugsweise direkt neben den beweglichen Scheiben 15 angeordnet. Die Scheiben 18 haben Ausnehmungen 19 für die biegsamen Stäbe 14 . Diese Ausnehmungen 19 sind so bemessen, daß die biegsamen Stäbe 14 beim Abrollen der Walze 1 auf dem Boden gegen den Grund der Ausnehmung 19 gepreßt werden. Die Oberfläche der Ausnehmung kann besonders gehärtet oder mit verschleißfestem Material ausgelegt werden. Die Scheiben 15 und 18 werden mit etwa 8 mm relativ schmal ausgebildet. Es ist daher vorteilhaft, die Ausnehmungen 19 mit an die Form der Ausnehmungen angepaßten Flacheisen auszukleiden, die etwa 35 mm breit sind und mit der Scheibe 18 verschweißt werden. Beim Abrollen der Stabwalze wirken die biegsamen Stäbe 14 daher wie starre Stäbe 4 und begünstigen das Fahrverhalten der Stabwalze 1. Der dem gerade abrollenden biegsamen Stab 14 diametral gegenüberliegende biegsame Stab 14 wird durch den größeren Durchmesser der Scheibe 15 durch zwei benachbarte starre Stäbe 4 hindurchgeschoben und ragt daher über die durch die starren Stäbe 4 gebildete Mantelfläche der Stabwalze 1 hinaus. Dieser Vorgang spielt sich nach und nach bei der Rollbewegung der Stabwalze 1 für alle aufeinanderfolgenden biegsamen Stäbe 14 ab. Auf diese Weise werden alle sich zwischen den Stäben 4, 14 festklemmenden Steine, Erdkluten oder dergleichen nach außen abgestoßen, und zwar besonders im kritischen mittleren Bereich der Walze. Aber auch im äußeren Bereich der Stabwalze wirkt diese Konstruktion günstig, weil insgesamt die Zahl der starren und biegsamen Stäbe 4, 14 bei gleicher Gesamtzahl wie bisher für den geringeren Anfall an Fremdkörpern und für die Bearbeitungsqualtät des Bodens ausreichend ist, aber im mittleren Bereich zusätzliche Wirkungen entfaltet. Werden die biegsamen Stäbe zusätzlich zur bisher üblichen Stabzahl angeordnet, so ist der Effekt im mittleren und im Außenbereich größer als bisher.

In Fig. 2 ist eine Seitenansicht der Scheiben 15 und 18 dargestellt, bei der eine biegsame Stange 14 gerade auf dem Boden abrollt und die diametral gegenüberliegende Stange 14 über den Umfang der Scheibe 18 hinausgeschoben ist. Auch die benachbarten biegsamen Stangen 14 stehen bei dieser Darstellung noch über den Rand der Scheibe 18 hinaus, der die Mantelfläche der Walze 1 darstellt. Am oberen Rand der Scheibe 18 ist die Ausnehmung 19 deutlich sichtbar, die im Bodenbereich die biegsame Stange 14 aufnimmt und so am Boden festlegt.

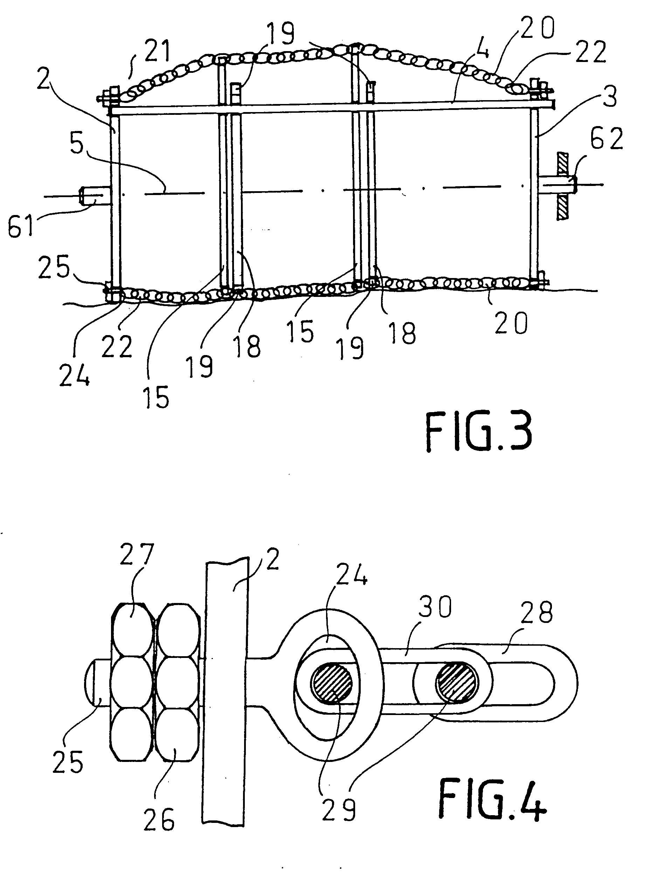

In Fig. 3 ist die Seitenansicht eines weiteren Ausführungsbeispiels der Erfindung dargestellt, bei dem statt der biegsamen Stäbe 14 zwischen den Befestigungsstellen 12, 13 Ketten 20 gespannt sind. Diese Ketten 20 sind relativ feingliedrig und sind an ihren Enden 21, 22 mit Haken 23 in die Augen 24 von Spannschrauben 25 eingehängt. Die Spannung der Ketten 20 wird durch Muttern 26 bewirkt, die an der Außenseite der Scheiben 2, 3 über das Schraubgewinde der Spannschrauben 25 geschraubt werden. Die richtige Spannung wird dann beispielsweise durch eine zweite Kontermutter 27 gesichert. Die Wirkung der soweit beschriebenen Anordnung entspricht der Wirkung der Anordnung nach Fig. 1. Durch die vielen relativ zueinander bewegbaren Glieder der Kette 20 wird jedoch die Säuberungswirkung der Anordnung noch verstärkt und zusätzlich noch durch das unvermeidbare Hin- und Herschwingen selbst der gespannten Kette. Die Ausnehmung 19 für die Kette 20 kann durch eine besondere Härtung oder Lagerschale gegen Verschleiß gesichert werden. Das anhand Fig.1 beschriebene Flacheisen zur Auskleidung der Ausnehmung 19 wird vorzugsweise in die Ausnehmung eingelassen, damit die schwingende Kette nicht hinter die Kanten fassen und das Flacheisen abreißen kann.

In Fig. 4 ist als Detail aus Fig. 3 eine Augenschraube 24, 25 dargestellt, die durch die Scheibe 2 gesteckt und auf deren Außenseite durch die Muttern 26, 27 festgelegt ist. Zwischen den Muttern und den Scheiben 2, 3 ist zweckmäßig noch eine Federscheibe oder dergleichen eingefügt, um die Verbindung weicher zu gestalten. Das jeweils letzte Kettenglied 28 ist mit dem Auge 24 der Augenschraube 24, 25 durch einen u-förmigen Metallverbinder, z.B. einen Bügel 29 verbunden, der mittels einer Abschlußplatte 30 und einer nicht dargestellten Sicherung, z.B einer Seeger-Sicherung, gesichert ist.

Beim Abrollen der Walze 1 wird jeweils ein beweglicher Stab 14 neben denjenigen starren Stab 4 geschoben, der auf den dem gerade abrollenden beweglichen Stab 14 benachbarten starren Stab 4 folgt. Die starren Stäbe 4 sind beispielsweise Rundstäbe, können aber auch feingliedrige Ketten, Federstäbe, Gliederstäbe oder Spiralfedern sein. Die starren Stäbe 4 und/oder die beweglichen Stäbe 14 können aus Kunststoff, Metall oder aus Gummi gefertigt sein. Die starren Stäbe 4 können durch Verschweißen mit der oder den Stützscheiben 18 verbunden sein. Jeweils ein Halterungselement 15 für die beweglichen Stäbe 14 ist neben einer Stützscheibe 18 für die starren Stäbe 4 angeordnet. Die Spannung der beweglichen Stäbe 14 ist einstellbar. Die Stützscheibe 18 für die starren Stäbe 4 weist eine Breite von weniger als 10mm auf und die Ausnehmungen 19 sind mit Einlagen aus Flacheisen, Lagermaterial, Kunststoff oder dergleichen ausgekleidet, die eine Breite von mehr als 10 mm, insbesondere 35 mm haben.

## Patentansprüche

1. Stabwalze mit einem walzenförmigen Hohlkörper (1) und mit einer Mantelfläche des Hohlkörpers, die aus annähernd quer zur Bewegungsrichtung der Stabwalze starr mit Abstand voneinander angeordneten Stäben (4) gebildet wird, **dadurch gekennzeichnet, daß** zwischen den starren Stäben (4) biegsame Stäbe oder Ketten (14) angeordnet sind, daß die biegsamen Stäbe (14) oder Ketten und die starren Stäbe (4) an ihren jeweiligen beiden stirnseitigen Enden (10,11,12,13) in zu den biegsamen Stäben oder Ketten und starren Stäben gemeinsamen Halterungselementen (2,3) ortsfest gelagert sind, daß zwischen den Halterungselementen (2,3) Mittel (15) zum Halten der biegsamen Stäbe oder Ketten (14) in vorbestimmten Positionen vorgesehen sind, welche Mittel einen größeren Durchmesser als den Walzendurchmesser aufweisen.

2. Stabwalze nach Anspruch 1, **dadurch gekennzeichnet, daß** die Befestigungsstellen der Stäbe (4,14) gegeneinander versetzt angeordnet sind, so daß die Stäbe auf der Mantelfläche schräg verlaufen.

3. Stabwalze nach Anspruch 1 oder 2, **dadurch gekennzeichnet, daß** die biegsamen Stäbe oder Ketten (14) mittels lösbarer Verbindungselemente (24-30) mit den Halterungselementen (2,3) verbunden sind.

4. Stabwalze nach Anspruch 1 bis 3, **dadurch gekennzeichnet, daß** die Mittel (15) zum Halten der biegsamen Stäbe oder Ketten (14) in vorbestimmten Positionen ringförmig sind.

5. Stabwalze nach Anspruch 1 bis 3, **dadurch gekennzeichnet, daß** die Mittel (15) zum Halten der biegsamen Stäbe oder Ketten (14) sternförmig sind.

6. Stabwalze nach einem der Ansprüche 1 bis 5, **dadurch gekennzeichnet, daß** zwischen den Halterungselementen (2,3) Stützscheiben (18) zur Stabilisierung der starren Stäbe (4) vorgesehen sind,

7. Stabwalze nach Anspruch 6, **dadurch gekennzeichnet, daß** die Stützscheiben (18) Ausnehmungen (19) zur Aufnahme je eines biegsamen Stabes oder je einer Kette (14) haben, die als Widerlager für den jeweils auf dem Boden abrollenden biegsamen Stab oder Kette (14) dienen.

8. Stabwalze nach Anspruch 6, **dadurch gekennzeichnet, daß** den starren Stäben (4) in den Halterungselementen für die biegsamen Stäbe oder Ketten (14) Ausnehmungen (17) zugeordnet sind, derart, daß die starren Stäbe (4) die Halterungselemente (15) nicht behindern.

9. Stabwalze nach Anspruch 1 bis 8, **dadurch gekennzeichnet, daß** die Halterungselemente (15) für die biegsamen Stäbe oder Ketten (14) scheibenförmig ausgebildet sind.

10. Stabwalze nach Anspruch 1 bis 9, **dadurch gekennzeichnet, daß** die Stützscheiben (18) mit den starren Stäben (4) fest verbunden sind.

11. Stabwalze nach Anspruch 1 bis 10, **dadurch gekennzeichnet, daß** die biegsamen Stäbe oder Ketten (14) seitlich verschiebbar oder verbiegbar sind.

12. Stabwalze nach einem der Ansprüche 1-11, **dadurch gekennzeichnet, daß** jeweils ein biegsamer Stab (14) und ein starrer Stab oder jeweils eine Kette und ein starrer Stab (4) abwechselnd nebeneinander angeordnet sind.

## Claims

1. Cage drum roller having a cylindrical hollow body (1) and having a lateral surface of the hollow body which is formed by bars (4) disposed rigidly at a distance from one another substantially at right angles to the direction of movement of the cage drum roller, **characterized in that** flexible bars or chains (14) are disposed between the rigid bars (4), that the flexible bars (14) or chains and the rigid bars (4) at their in each case two front ends (10, 11, 12, 13) are supported in a stationary manner in mounting elements (2, 3) common to the flexible bars or chains and the rigid bars, that provided between the mounting elements (2, 3) are means (15) of holding the flexible bars or chains (14) in predetermined positions, which means have a greater diameter than the roller diameter.

2. Cage drum roller according to claim 1, **characterized in that** the fastening points of the bars (4, 14) are disposed offset relative to one another so that the bars extend obliquely along the lateral surface.

3. Cage drum roller according to claim 1 or 2, **characterized in that** the flexible bars or chains (14) are connected by means of releasable connecting elements (24-30) to the mounting elements (2, 3).

4. Cage drum roller according to claims 1 to 3, **characterized in that** the means (15) of holding the flexible bars or chains (14) in predetermined positions are annular.

5. Cage drum roller according to claims 1 to 3, **characterized in that** the means (15) of holding the flexible bars or chains (14) are star-shaped.

6. Cage drum roller according to one of claims 1 to 5, **characterized in that** supporting discs (18) for stabilizing the rigid bars (4) are provided between the mounting elements (2, 3).

7. Cage drum roller according to claim 6, **characterized in that** the supporting discs (18) have recesses (19) for receiving in each case one flexible bar or chain (14), which serve as abutments for the flexible bar or chain (14) rolling in each case on the ground.

8. Cage drum roller according to claim 6, **characterized in that** recesses (17) are associated with the rigid bars (4) in the mounting elements for the flexible bars or chains (14) in such a way that the rigid bars (4) do not obstruct the mounting elements (15).

9. Cage drum roller according to claims 1 to 8, **characterized in that** the mounting elements (15) for the flexible bars or chains (14) are of a disc-shaped design.

10. Cage drum roller according to claims 1 to 9, **characterized in that** the supporting discs (18) are firmly connected to the rigid bars (4).

11. Cage drum roller according to claims 1 to 10, **characterized in that** the flexible bars or chains (14) are laterally displaceable or bendable.

12. Cage drum roller according to one of claims 1 to 11, **characterized in that** in each case one flexible bar (14) and one rigid bar or in each case one chain and one rigid bar (4) are disposed alternately next to one another.

## Revendications

1. Rouleau cage comprenant un corps creux (1) en forme de rouleau et une surface latérale du corps creux constituée de barres disposées rigidement à distance les unes des autres, à peu près transversalement à la direction de mouvement du rouleau cage, caractérisé en ce que des barres souples ou des chaînes (14) sont disposées entre les barres rigides (4), que les barres souples ou les chaînes (14) et les barres rigides (4) sont montées en position fixe, à leurs deux extrémités respectives (10, 11, 12, 13) situées aux côtes terminaux, dans des éléments de support (2, 3) communs aux barres souples ou aux chaînes et aux barres rigides, et que des moyens (15) sont prévus entre les éléments de support (2, 3) pour maintenir les barres souples ou les chaînes (14) à des positions prédéterminées, moyens qui ont un plus grand diamètre que le rouleau.

2. Rouleau cage selon la revendication 1, caractérisé en ce que les points de fixation des barres (4, 14) sont décalés les uns par rapport aux autres, de manière que les barres s'étendent obliquement sur la surface latérale.

3. Rouleau cage selon la revendication 1 ou 2, caractérisé en ce que les barres souples ou les chaînes (14) sont reliées aux éléments de support (2, 3) par l'intermédiaire d'éléments d'assemblage (24 - 30) détachables.

4. Rouleau cage selon les revendications 1 à 3, caractérisé en ce que les moyens (15) pour maintenir les barres souples ou les chaînes (14) dans des positions prédéterminées ont une forme annulaire.

5. Rouleau cage selon les revendications 1 à 3, caractérisé en ce que les moyens (15) pour maintenir les barres souples ou les chaînes (14) ont une forme en étoile.

6. Rouleau cage selon une des revendications 1 à 5, caractérisé en ce que des disques de soutien (18) sont prévus entre les éléments de support (2, 3) en vue de la stabilisation des barres rigides (4).

7. Rouleau cage selon la revendication 6, caractérisé en ce que les disques de soutien (18) présentent des évidements (19) destinés à recevoir chacun une barre souple ou une chaîne (14) et qui servent de contre-appuis pour la barre souple ou la chaîne (14) roulant sur le sol.

8. Rouleau cage selon la revendication 6, caractérisé en ce que des évidements (17) sont associés aux barres rigides (4) dans les moyens ou éléments de maintien (15) prévus pour les barres souples ou chaînes (14), de sorte que les barres rigides(4) ne gênent pas les moyens (15) de maintien.

9. Rouleau cage selon les revendications 1 à 8, caractérise en ce que les moyens (15) pour maintenir les barres souples ou les chaînes (14) sont réalises sous forme de disques.

10. Rouleau cage selon les revendications 1 à 9, caractérise en ce que les disques de soutien (18) sont reliés de façon fixe aux barres rigides (4).

11. Rouleau cage selon les revendications 1 à 10, caractérisé en ce que les barres souples ou les chaînes (14) sont latéralement déplaçables ou fléchissables.

12. Rouleau cage selon une des revendications 1 à 11, caractérisé en ce qu'une barre souple (14) et une barre rigide (4), ou une chaîne et une barre rigide (4) sont chaque fois placées alternativement l'une à côté de l'autre.
